# EUROPEAN PATENT SPECIFICATION

(11) **EP 3 291 604 B1**
(45) Date of publication and mention of the grant of the patent: **04.09.2019**
(21) Application number: 15892094.2
(22) Date of filing: 15.05.2015
(51) Int. Cl.: H04W 48/16, H04W 76/10

(54) **METHOD FOR ESTABLISHING CONNECTION WITH RADIO RESOURCE, USER EQUIPMENT AND BASE STATION**
VERFAHREN ZUM AUFBAU EINER VERBINDUNG MIT FUNKRESSOURCEN, BENUTZERGERÄT UND BASISSTATION
PROCÉDÉ POUR ÉTABLIR UNE CONNEXION AVEC UNE RESSOURCE RADIO, ÉQUIPEMENT UTILISATEUR ET STATION DE BASE

(43) Date of publication of application: 07.03.2018
(73) Proprietor: Huawei Technologies Co., Ltd., Longgang District Shenzhen, Guangdong 518129 (CN)
(72) Inventor: ZHENG, Xiaoxiao, Shenzhen Guangdong 518129 (CN); YANG, Li, Shenzhen Guangdong 518129 (CN); GUO, Yi, Shenzhen Guangdong 518129 (CN); XU, Xiaoying, Shenzhen Guangdong 518129 (CN); PANG, Lingli, Shenzhen Guangdong 518129 (CN)
(74) Representative: Epping - Hermann - Fischer
(86) International application number: PCT/CN2015/079033
(87) International publication number: WO 2016/183713

(56) References cited:
- WO-A1-2008/000914
- WO-A1-2014/109603
- WO-A2-2007/144760
- CN-A- 101 505 514
- CN-A- 101 562 848
- CN-A- 101 801 044
- CN-A- 103 228 015
- CN-A- 103 228 015
- US-A1- 2011 281 581
- US-A1- 2012 302 239
- CHINA UNICOM: "Improvement of CS Fallback with call redirection", 3GPP DRAFT; R3-131946, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Venice, Italy; 20131007 - 20131011 12 October 2013 (2013-10-12), XP050754907, Retrieved from the Internet: URL:http://www.3gpp.org/ftp/tsg_ran/WG3_Iu /TSGR3_81bis/Docs/ [retrieved on 2013-10-12]

## Description

### TECHNICAL FIELD

The present invention relates to the communications field, and in particular, to a radio resource connection setup method, user equipment, and a base station.

### BACKGROUND

In a communications system, when user equipment (UE) camps on a cell and needs to initiate a service, the UE initiates a physical random access channel (PRACH) process to the camped cell, so as to apply for resources to set up a signaling connection and then set up the service. After receiving a connection setup request from the UE, a network side chooses, according to data such as the service initiated by the UE, network load, and a measurement result, to allocate resources of the cell to the UE, so that a connection can be set up, or the UE can be redirected or handed over to another cell. In this case, radio resource control (RRC) connection setup is currently used as an example. When the UE needs to be handed over to another cell, a frequency is designated in an RRC connection reject message, and the UE searches for a cell on the designated frequency, and then camps on the found cell, so as to initiate RRC connection setup in the cell. It can be learned that, a delay is relatively long and signaling is excessive in a current radio resource connection setup procedure.

CN 103228015 A provides a cell handover method, cell handover equipment and a cell handover system for a monitor terminal. The cell handover method comprises the steps as follows: an idle monitor terminal in the current cell monitors a paging message transmitted from core network equipment via a source base station; the monitor terminal measures the current cell and an adjacent cell according to measurement configuration information contained in the paging message; when the results of cell measurement shows that measurement report is carried out, an RRC (Connection Reconfiguration) connection between the monitor terminal and the resource base station is established; based on the RRC connection, the monitor terminal submits a measurement report containing a mark of the adjacent cell determined as a target cell and another mark of a group determined as a target group for the core network equipment via the resource base station; and when the monitor terminal receives a handover instruction transmitted from the core network equipment according to the measurement report determining to carry out cell handover for the monitor terminal, the monitor terminal is switched to the target group of the target cell.

WO 2014/109603 A1 provides a method and apparatus for transmitting an indication in a wireless communication system. A user equipment (UE) transmits an indication to a second node to inform establishment of a connection between a first node and the UE. Alternatively, a method and apparatus for establishing a connection in a wireless communication system is provided.

US 2012/0302239 A1 relates to an architecture that can provide enhancement with respect to circuit switched fall back. In particular, the architecture can reduce the signaling and delay of conventional systems that are necessitated by establishing a radio resource control connection prior to establishing the circuit switched fall back connection. For example, when user equipment is not in a radio resource control connected state at the time of a circuit switched fall back call, the radio resource control connection can be at least partially avoided by responding to a radio resource control connection request message with a radio resource control connection reject message that includes target cell reselection information.

### SUMMARY

The present invention provides a radio resource connection setup method, user equipment, and a base station as defined in the attached set of claims, so that a delay and signaling in a radio resource connection setup procedure can be reduced.

In the claimed technical solutions, user equipment (UE) initiates a RRC connection request message to a first base station to which a camped cell currently being camped on belongs; the UE receives a RRC connection setup request message that carries an air interface resource of an access cell, where the access cell is a camped cell that is not of the UE and that is identified by the first base station; and the UE feeds back, in the access cell, a connection setup acknowledgement message to a base station to which the access cell belongs. The RRC connection setup message further comprises mapping information of a radio bearer (RB), configuration information of an RB, and timing advance (TA) information used to adjust uplink sending. The UE determines an uplink transmission configuration and a downlink transmission configuration according to the configuration information and the mapping information, and determines, according to the TA information, a time of reporting the setup acknowledgement message. Therefore, when the UE needs to be handed over between cells, the UE does not need to re-initiate radio resource connection setup. Therefore, compared with the prior art, in the present invention, a delay and signaling in a radio resource connection setup procedure can be reduced.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a radio resource connection setup method according to an embodiment of the present invention;
FIG. 2 is a schematic flowchart of another radio resource connection setup method according to an embodiment of the present invention;
FIG. 3 is a schematic flowchart of another radio resource connection setup method according to an embodiment of the present invention;
FIG. 4 is a schematic diagram of another radio resource connection setup method according to an embodiment of the present invention;
FIG. 5 is a schematic structural diagram of UE according to an embodiment of the present invention;
FIG. 6 is a schematic structural diagram of another UE according to an embodiment of the present invention;
FIG. 7 is a schematic structural diagram of a base station according to an embodiment of the present invention;
FIG. 8 is a schematic structural diagram of another base station according to an embodiment of the present invention;
FIG. 9 is a schematic structural diagram of another UE according to an embodiment of the present invention; and
FIG. 10 is a schematic structural diagram of another base station according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

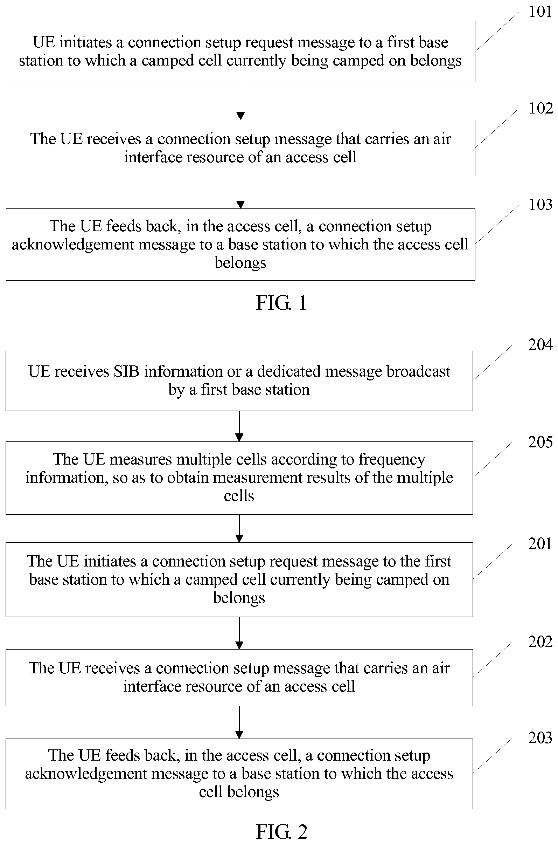

Referring to FIG. 1, FIG. 1 is a schematic flowchart of a radio resource connection setup method according to an embodiment of the present invention. As shown in FIG. 1, the method includes the following steps.

101. UE initiates a connection setup request message to a first base station to which a camped cell currently being camped on belongs.

In this embodiment, when the UE needs to request a resource from the camped cell currently being camped on or initiate a service, the UE may initiate the connection setup request message such as an RRC connection request message to the first base station to which the camped cell currently being camped on belongs.

102. The UE receives a connection setup message that carries an air interface resource of an access cell, where the access cell is a camped cell that is not of the UE and that is identified by the first base station.

After receiving the connection setup message, the first base station may determine whether the UE can set up a radio resource connection (for example, set up an RRC connection) in the camped cell. For example, when the connection setup request message carries a service type, the first base station may determine, according to a load status of the camped cell and the service type reported by the UE, whether a connection is to be set up in the camped cell, or the first base station may determine, according to a load status of the camped cell, whether a connection is to be set up in the camped cell. When identifying that the UE does not set up a radio resource connection to the camped cell, for example, when identifying that the UE needs to be handed over to another cell for access, the first base station may select an access cell used for radio resource connection setup of the UE, that is, select a cell to which the UE is to set up a link. For example, when the connection setup request message carries reported information such as a measurement result, frequency capability information, or the service type, the first base station may identify, according to the reported information, a cell that is to be used as the access cell. Alternatively, the first base station may identify, according to related policy information such as pre-stored capability information of the UE, the service type, or network load, a cell that is to be used as the access cell. In this case, a connection or a link is set up in the access cell.

After the first base station selects the access cell, the first base station sends an RRC connection setup message to the UE.

In addition, the connection setup message received by the UE may be sent by the first base station, or may be sent by a base station to which the access cell belongs.

The camped cell that is not of the UE may be any cell except the camped cell.

103. The UE feeds back, in the access cell, a connection setup acknowledgement message to a base station to which the access cell belongs.

After receiving the connection setup request message, the UE may feed back, in the access cell, the connection setup acknowledgement message to the base station to which the access cell belongs. The connection setup acknowledgement message may be an RRC connection setup complete message at L3 (an RRC layer), or may be other acknowledgement information at L1 (a physical layer) or L2 (a MAC layer or an RLC layer), for example, a MAC control element.

In addition, in this embodiment, in step 103, the connection setup acknowledgement message may be fed back by using the air interface resource of the access cell.

In addition, optionally, the air interface resource may include a radio link control (RLC) configuration, and the RLC configuration may include an RLC mode, an RLC SN length, an RLC poll timer, and the like.

In addition, the air interface resource may further include a logical channel configuration, and the logical channel configuration includes a logical channel priority, a guaranteed rate, logical channel group information, and the like.

In addition, the air interface resource may further include packet data convergence protocol (PDCP) configuration information, and the PDCP configuration information may include a discard timer, a sequence number configuration, a header compression configuration, and the like.

In addition, the air interface resource may further include media access control (MAC) configuration information, and the MAC configuration information may include the maximum number of uplink hybrid automatic repeat request (HARQ) retransmissions, a periodic buffer status report (BSR) report timer, a TA valid time, a scheduling information SR sending cycle, an available power PHR sending cycle, a discontinuous reception (DRX) parameter, and the like.

In addition, the air interface resource may further include a semi-persistent scheduling configuration, and the semi-persistent scheduling configuration includes an uplink semi-persistent cycle, a downlink semi-persistent cycle, and a quantity of processes.

In addition, the air interface resource may further include a dedicated physical configuration, and the dedicated physical configuration includes a physical downlink shared channel (PDSCH) power offset, a physical uplink control channel (PUCCH) resource, acknowledgement/negative acknowledgement (ACK/NACK) repeat times, a physical uplink shared channel (PUSCH) power offset, a frequency hopping mode, an uplink power control configuration, a channel quality indicator (CQI) configuration, a radio link failure (RLF) timer, a measurement format, and the like.

In addition, in addition to the air interface resource, the connection setup request message may include an ID for uniquely identifying the UE in the access cell, TA information, that is, a UE adjustment time required for last uplink sending, and the like.

By performing the foregoing steps, when the UE needs to initiate radio resource connection setup in a cell other than the cell currently being camped on, the UE does not need to re-initiate a connection setup request message, but can directly complete, based on the connection setup request message initiated in the cell currently being camped on, RRC connection setup in the cell other than the cell currently being camped on. Therefore, a delay and signaling in a radio resource connection setup procedure can be reduced.

In this embodiment, the UE may be any intelligent device that specifically initiates RRC connection setup, for example, a mobile phone, a tablet computer, an in-vehicle device, a wearable device, or the like.

In this embodiment, UE initiates a connection setup request message to a first base station to which a camped cell currently being camped on belongs; the UE receives a connection setup message that carries an air interface resource of an access cell, where the access cell is a camped cell that is not of the UE and that is identified by the first base station; and the UE feeds back, in the access cell, a connection setup acknowledgement message to a base station to which the access cell belongs. Therefore, when the UE needs to be handed over between cells, the UE does not need to re-initiate radio resource connection setup. Therefore, compared with the prior art, in the present invention, a delay and signaling in a radio resource connection setup procedure can be reduced.

Referring to FIG. 2, FIG. 2 is a schematic flowchart of another radio resource connection setup method according to an embodiment of the present invention. As shown in FIG. 2, the method includes the following steps.

201. UE initiates a connection setup request message to a first base station to which a camped cell currently being camped on belongs.

In this embodiment, the RRC connection request message may carry reported information such as a measurement result, frequency capability information of the UE, and a service type. In this case, the first base station may further identify, based on the reported information carried in the RRC connection request message, an access cell to which the UE is to set up a connection.

202. The UE receives a connection setup message that carries an air interface resource of an access cell, where the access cell is a camped cell that is not of the UE and that is identified by the first base station.

In this embodiment, step 202 may include:
receiving, by the UE, a connection setup message that is sent by the first base station and that carries an air interface resource of an access cell, where the access cell belongs to the first base station.

In this implementation, the UE can set up a connection to the access cell that is adjacent to the camped cell and that belongs to the first base station.

In addition, in this implementation, the air interface resource of the access cell may be selected by the first base station.

In this embodiment, step 202 may include:
receiving, by the UE, a connection setup message that is sent by the first base station and that carries an air interface resource of an access cell, where the access cell belongs to a second base station.

In addition, in this implementation, the air interface resource of the access cell may be returned to the first base station by the second base station in response to a resource request sent by the first base station.

In this implementation, the UE can set up the connection to the access cell that belongs to the second base station adjacent to the first base station. For example, when the first base station identifies that it is currently inappropriate for the UE to set up a connection to any cell that belongs to the first base station, the first base station may send a request to the neighboring second base station to request a cell that belongs to the second base station to be used for connection setup of the UE. For example, when the first base station identifies that the UE does not set up a connection to the camped cell, the first base station may send a resource request message to the neighboring second base station, and the second base station returns a response message (i.e., resource response message) to the first base station after receiving the request. The response message carries the air interface resource of the access cell, and the access cell may be a cell that is selected by the first base station according to the measurement result reported by the UE, that belongs to the second base station, and that is used for the connection setup of the UE.

203. The UE feeds back, in the access cell, a connection setup acknowledgement message to a base station to which the access cell belongs.

In this embodiment, before step 201, the method may further include the following steps. 204. The UE receives system information block (SIB) information or a dedicated message broadcast by the first base station, where the SIB information or the dedicated message includes frequency information of multiple cells.

205. The UE measures the multiple cells according to the frequency information, so as to obtain measurement results of the multiple cells.

The connection setup request message may carry the measurement results of the multiple cells, and the measurement results of the multiple cells are used by the first base station to select the access cell corresponding to the UE; or
the connection setup request message may carry a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

The measurement result of the at least one candidate cell may be reported in a bitmap manner. For example, for a frequency F1 or a cell ID cell1 of the camped cell, and a frequency F2, a frequency F3, and a frequency F4 or a cell ID cell2, a cell ID cell3, and a cell ID cell4 of three other neighboring cells in the SIB information, if the UE supports the frequency F2 and the frequency F4 but does not support the frequency F3, or if the cell2 and the cell4 meet the measurement result but the cell3 does not meet the measurement result, the measurement result reported by the UE may include 101.

In addition, the SIB information or the dedicated message may further include measurement information, for example, a preset threshold. In this case, when measuring the multiple cells, the UE may select, as the candidate cell, a cell whose measured signal quality is higher than the preset threshold. In this case, signal quality of the access cell can be ensured. In addition, in this implementation, the measurement result may be used in combination with a capability of the UE, and the candidate cell is a cell that is supported by the UE and whose measured signal quality is higher than the preset threshold.

In this implementation, step 202 may include:
monitoring, by the UE, the at least one candidate cell, and receiving, in the access cell in the at least one candidate cell, the connection setup message that carries the air interface resource of the access cell.

In this implementation, the UE can receive the connection setup message in the access cell. For example, the base station to which the access cell belongs sends the connection setup message to the UE.

In this embodiment, the connection setup request message may further carry at least one of the following:
a frequency capability supported by the UE or a measurement result.

The frequency capability and the measurement result may not be obtained from the SIB information or the dedicated message. For example, the UE measures another cell such as a preset cell or a neighboring cell, so as to obtain a measurement result of the cell. In addition, the frequency capability supported by the UE and the measurement result may be used by the first base station to select the access cell of the UE. That is, the first base station may select the access cell of the UE according to the frequency capability supported by the UE and/or the measurement result.

In this embodiment, the connection setup message may further include at least one of the following:
mapping information of a radio bearer (RB), configuration information of an RB, timing adjustment (TA) information used to adjust uplink sending, physical layer resource information, or signature sequence information of a PRACH.

Certainly, the information is only optional herein. For example, the connection setup message may not include the information.

The mapping information and the configuration information of the RB may be sent by the base station to which the access cell belongs. For example, when the access cell belongs to the second base station, the mapping information and the configuration information of the RB may be directly sent by the second base station to the UE by using the connection setup message; or the second base station sends the mapping information and the configuration information of the RB to the first base station, and then, the first base station sends the mapping information and the configuration information of the RB to the UE by using the connection setup message. Alternatively, when the access cell belongs to the first base station, the mapping information and the configuration information of the RB may be directly sent by the first base station to the UE by using the connection setup message. The configuration information may include radio link control (RLC) configuration information, packet data convergence protocol (PDCP) configuration information, and media access control (MAC) configuration information. In this case, the UE may determine an uplink transmission configuration and a downlink transmission configuration according to the configuration information and the mapping information.

In addition, the TA information used to adjust uplink sending may also be sent by the base station to which the access cell belongs. For example, when the access cell belongs to the second base station, the TA information may be directly sent by the second base station to the UE by using the connection setup message; or the second base station sends the TA information to the first base station, and then, the first base station sends the TA information to the UE by using the connection setup message; or the first base station obtains the TA information through calculation by using a timing difference between the two base stations, and sends the TA information to the UE. Alternatively, when the access cell belongs to the first base station, the TA information may be directly sent by the first base station to the UE by using the connection setup message. The TA information may be used by the UE to determine uplink sending timing. That is, the UE may determine, according to the TA information, a time of reporting the RRC setup acknowledgement message.

In addition, the UE may further maintain TA information of a group of cells, and in this case, before a predetermined timer expires, the UE may use the stored TA information to access any one of the group of cells.

In this embodiment, the UE may further send the RRC setup acknowledgement message by using a TA value sent by the first base station in the camped cell. That is, the UE may further feed back, according to the TA value sent by the first base station in the camped cell, the connection setup acknowledgement message to the base station to which the access cell belongs.

In this embodiment, the signature sequence information of the PRACH may be signature sequence information of the access cell, and in this case, the UE may use the signature sequence information to perform non-contention based random access to the access cell.

In this embodiment, the access cell and the camped cell may be intra-frequency cells, or may be inter-frequency cells, or may be different access subnets in an evolved network. For example, the access cell and the camped cell may be respectively a macro cell and a micro cell.

In this embodiment, based on the embodiment shown in FIG. 1, multiple optional implementations are added, and can all reduce a delay and signaling in a radio resource connection setup procedure.

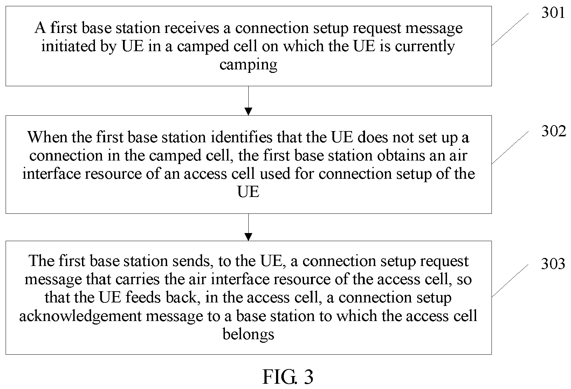

Referring to FIG. 3, FIG. 3 is a schematic flowchart of another radio resource connection setup method according to an embodiment of the present invention. As shown in FIG. 3, the method includes the following steps.

301. A first base station receives a connection setup request message initiated by UE in a camped cell on which the UE is currently camping.

302. When the first base station identifies that the UE does not set up a connection to the camped cell, the first base station obtains an air interface resource of an access cell used for connection setup of the UE.

Step 302 may be that when identifying that the UE needs to be handed over between cells or that the UE currently needs to execute a service in another cell, the first base station obtains the air interface resource of the access cell used for the connection setup of the UE.

In addition, optionally, the air interface resource may include a radio link control (RLC) configuration, and the RLC configuration may include an RLC mode, an RLC SN length, an RLC poll timer, and the like.

In addition, the air interface resource may further include a logical channel configuration, and the logical channel configuration includes a logical channel priority, a guaranteed rate, logical channel group information, and the like.

In addition, the air interface resource may further include packet data convergence protocol (PDCP) configuration information, and the PDCP configuration information may include a discard timer, a sequence number configuration, a header compression configuration, and the like.

In addition, the air interface resource may further include media access control (MAC) configuration information, and the MAC configuration information may include the maximum number of uplink HARQ retransmissions, a periodic BSR report timer, a TA valid time, a scheduling information SR sending cycle, an available power PHR sending cycle, a DRX parameter, and the like.

In addition, the air interface resource may further include a semi-persistent scheduling configuration, and the semi-persistent scheduling configuration includes an uplink semi-persistent cycle, a downlink semi-persistent cycle, and a quantity of processes.

In addition, the air interface resource may further include a dedicated physical configuration, and the dedicated physical configuration includes a PDSCH power offset, a PUCCH resource, ACK/NACK repeat times, a PUSCH power offset, a frequency hopping mode, an uplink power control configuration, a CQI configuration, an RLF timer, a measurement format, and the like.

In addition, in addition to the air interface resource, a connection setup message may include an ID for uniquely identifying the UE in the access cell, TA information, that is, a UE adjustment time required for last uplink sending, and the like.

In this embodiment, after receiving the RRC connection request message, the first base station may determine whether the UE can set up a connection to the camped cell, and determine the access cell. For example, when the connection setup request message carries reported information such as a measurement result, frequency capability information, or a service type, the first base station may identify, according to the reported information, whether the UE sets up a connection to the camped cell. If the UE does not set up a connection to the camped cell, the first base station may identify, according to related policy information such as the reported information, pre-stored capability information of the UE, the service type, or network load, the access cell to which the UE is to set up a connection. That is, the first base station selects the access cell for the UE.

In this embodiment, that the first base station obtains the air interface resource of the access cell used for the connection setup of the UE may include:
selecting, by the first base station as the access cell used for the connection setup of the UE, a cell that belongs to the first base station and that is adjacent to the camped cell, and obtaining the air interface resource of the access cell.

For example, when the first base station identifies that the UE can set up a connection to a cell that belongs to the first base station, the first base station may use the cell as the access cell, and obtain the air interface resource of the cell.

For example, when the connection setup request message carries the frequency capability information of the UE and the service type, the first base station may select, as the access cell according to the frequency capability information of the UE and the service type, a cell that belongs to the first base station, whose frequency is supported by the UE, and that provides a service of the service type.

In this embodiment, that the first base station obtains the air interface resource of the access cell used for the connection setup of the UE may include:
sending, by the first base station, a resource request to a second base station; and
receiving, by the first base station, a response message returned by the second base station in response to the resource request, where the response message carries the air interface resource of the access cell, and the access cell is a cell that belongs to the second base station and that is used for the connection setup of the UE.

For example, when the first base station identifies that no cell that belongs to the first base station is appropriate for the UE to set up a connection, the first base station may identify, according to the reported information, such as the measurement result, the frequency capability information of the UE, and the service type, carried in the connection setup request message, a cell that belongs to the second base station, use the cell as the access cell corresponding to the UE, and send the resource request to the second base station. The second base station may be a base station to which the access cell belongs, and the access cell is selected by the first base station according to the reported information carried in the RRC connection request message, and is corresponding to the UE. In addition, the resource request may further carry the measurement result, or may further carry the frequency capability information of the UE and the service type that are carried in the RRC request message, and in this case, the second base station may select the air interface resource of the access cell.

303. The first base station sends, to the UE, a connection setup message that carries the air interface resource of the access cell, so that the UE feeds back, in the access cell, a connection setup acknowledgement message to a base station to which the access cell belongs.

In this embodiment, before step 301, the following steps may be further included.

The first base station broadcasts SIB information or a dedicated message, where the SIB information or the dedicated message includes frequency information of multiple cells.

The connection setup request message carries measurement results of the multiple cells, and the measurement results of the multiple cells are used by the first base station to select the access cell corresponding to the UE; or
the connection setup request carries a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

In this case, after receiving the SIB information or the dedicated message, the UE may measure the multiple cells according to the frequency information, so as to obtain the measurement results of the multiple cells; or the UE may select, from the multiple cells according to the measurement result, the at least one candidate cell to which the UE can set up the connection. In this case, the connection setup request message initiated by the UE may include the measurement results of the multiple cells, or include the measurement result of the at least one candidate cell, so that the first base station can select, according to the reported measurement result, the access cell corresponding to the UE.

In this embodiment, the connection setup request message may further carry at least one of the following:
a frequency capability supported by the UE or a measurement result.

The frequency capability and the measurement result may not be obtained from the SIB information or the dedicated message. For example, the UE measures another cell such as a preset cell or a neighboring cell, so as to obtain a measurement result of the cell. In addition, the frequency capability supported by the UE and the measurement result may be used by the first base station to select the access cell of the UE. That is, the first base station may select the access cell of the UE according to the frequency capability supported by the UE and/or the measurement result.

In this embodiment, the connection setup message may further include at least one of the following:
mapping information of an RB, configuration information of an RB, TA information used to adjust uplink sending, physical layer resource information, or signature sequence information of a PRACH.

Certainly, the information is only optional herein. For example, the connection setup message may not include the information.

The mapping information and the configuration information of the RB may be sent by the base station to which the access cell belongs. For example, when the access cell belongs to the second base station, the mapping information and the configuration information of the RB may be directly sent by the second base station to the UE by using the connection setup request message; or the second base station sends the mapping information and the configuration information of the RB to the first base station, and then, the first base station sends the mapping information and the configuration information of the RB to the UE by using the connection setup message. Alternatively, when the access cell belongs to the first base station, the mapping information and the configuration information of the RB may be directly sent by the first base station to the UE by using the connection setup message. The configuration information may include radio link control (RLC) configuration information, packet data convergence protocol (PDCP) configuration information, and media access control (MAC) configuration information. In this case, the UE may determine an uplink transmission configuration and a downlink transmission configuration according to the configuration information and the mapping information.

In addition, the TA information used to adjust uplink sending may also be sent by the base station to which the access cell belongs. For example, when the access cell belongs to the second base station, the TA information may be directly sent by the second base station to the UE by using the connection setup request message; or the second base station sends the TA information to the first base station, and then, the first base station sends the TA information to the UE by using the connection setup request message; or the first base station obtains the TA information through calculation by using a timing difference between the two base stations, and sends the TA information to the UE. Alternatively, when the access cell belongs to the first base station, the TA information may be directly sent by the first base station to the UE by using the connection setup message. The TA information may be used by the UE to determine uplink sending timing. That is, the UE may determine, according to the TA information, a time of reporting the RRC setup acknowledgement message.

In addition, the UE may further maintain TA information of a group of cells, and in this case, before a predetermined timer expires, the UE may use the stored TA information to access any one of the group of cells.

In this embodiment, the UE may further send the RRC setup acknowledgement message by using a TA value sent by the first base station in the camped cell. That is, the UE may further feed back, according to the TA value sent by the first base station in the camped cell, the RRC setup acknowledgement message to the base station to which the access cell belongs.

In this embodiment, the signature sequence information of the PRACH may be signature sequence information of the access cell, and in this case, the UE may use the signature sequence information to perform non-contention based random access to the access cell.

In this embodiment, the access cell and the camped cell may be intra-frequency cells, or may be inter-frequency cells, or may be different access subnets in an evolved network. For example, the access cell and the camped cell may be respectively a macro cell and a micro cell.

In this embodiment, a first base station receives a connection setup request message initiated by user equipment (UE) in a camped cell on which the UE is currently camping; when the first base station identifies that the UE does not set up a connection to the camped cell, the first base station obtains an air interface resource of an access cell used for connection setup of the UE; and the first base station sends, to the UE, a connection setup message that carries the air interface resource of the access cell, so that the UE feeds back, in the access cell, a connection setup acknowledgement message to a base station to which the access cell belongs. Therefore, a delay and signaling in a radio resource connection setup procedure can be reduced.

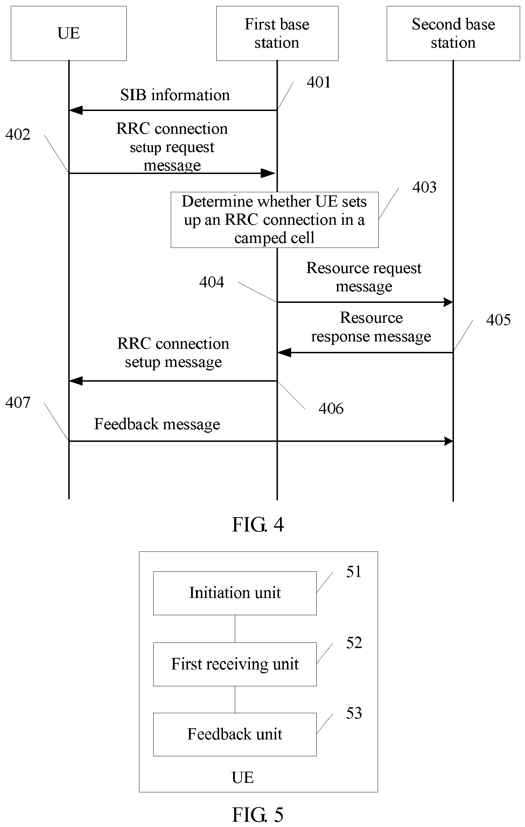

Referring to FIG. 4, FIG. 4 is a schematic diagram of another radio resource connection setup method according to an embodiment of the present invention. As shown in FIG. 4, the method includes the following steps.

401. UE receives SIB information broadcast by a first base station.

The SIB information may include access information of a camped cell.

402. The UE sends an access request in a camped cell, and sends an RRC connection request message to the first base station to which the camped cell belongs.

The RRC connection request message may carry reported information such as a frequency capability supported by the UE, a service type, and a measurement result.

403. The first base station determines whether the UE sets up an RRC connection to the camped cell.

The first base station may determine, according to related policy information such as the information reported by the UE or a UE capability pre-stored in a network and network load, whether the UE sets up a link in the camped cell or a neighboring cell that belongs to the base station or a neighboring cell that belongs to a neighboring base station.

404. When determining that the UE needs to set up an RRC connection to connect a neighboring second base station, the first base station sends a resource request message to the second base station.

405. The second base station returns a resource response message to the first base station in response to the resource request message, where the resource response message may include a corresponding air interface resource.

406. The first base station delivers a corresponding RRC connection setup message to the UE.

407. After receiving the RRC connection setup message, the UE sends a feedback message in a designated cell according to corresponding content in the RRC connection setup message. The designated cell is a cell designated in the RRC connection setup message. In addition, the feedback message may be an RRC connection setup complete message at L3, or may be other acknowledgement information at L1 or L2.

In this embodiment, UE receives SIB information broadcast by a first base station; the UE sends an access request in a camped cell, and sends an RRC connection request message to the first base station to which the camped cell belongs; the first base station determines whether the UE sets up an RRC connection to the camped cell; when determining that the UE needs to set up an RRC connection to connect a neighboring second base station, the first base station sends a resource request message to the second base station; the second base station returns a resource response message to the first base station in response to the resource request message, where the resource response message may include a corresponding air interface resource; the first base station delivers a corresponding RRC connection setup message to the UE; and after receiving the RRC connection setup message, the UE sends a feedback message in a designated cell according to corresponding content in the RRC connection setup message. In this way, the UE may initiate the RRC connection request message to the first base station in the camped cell. When the first base station determines that the UE does not set up an RRC connection to the camped cell, the first base station may request an air interface resource of an access cell from the second base station, and then, the first base station sends the air interface resource to the UE by using the RRC connection setup message, so that the UE can set up, after initiating the RRC connection request message in the camped cell, an RRC connection in the access cell that belongs to the second base station. Therefore, no RRC connection process further needs to be initiated in the access cell, and a delay and signaling in an RRC connection setup process can be reduced.

Certainly, this embodiment is only an example. For multiple implementations included in the present invention, refer to embodiments shown in FIG. 1 to FIG. 3.

The following are apparatus embodiments of the present invention. The apparatus embodiments of the present invention are used to execute the methods implemented in the method embodiments of the present invention that are shown in Fig. 1 to Fig. 4. For ease of description, only a part related to the embodiments of the present invention is shown. For unrevealed specific technical details, refer to Embodiments corresponding to Fig. 1 to 4 of the present invention respectively.

Referring to FIG. 5, FIG. 5 is a schematic structural diagram of UE according to an embodiment of the present invention. As shown in FIG. 5, the UE includes an initiation unit 51, a first receiving unit 52, and a feedback unit 53.

The initiation unit 51 is configured to initiate a connection setup request message to a first base station to which a camped cell currently being camped on belongs.

In this embodiment, when the UE needs to request a resource from the camped cell currently being camped on or initiate a service, the UE may initiate the connection setup request message such as an RRC connection request message to the first base station to which the camped cell currently being camped on belongs.

The first receiving unit 52 is configured to receive a connection setup message that carries an air interface resource of an access cell, where the access cell is a camped cell that is not of the UE and that is identified by the first base station.

After receiving the connection setup message, the first base station may determine whether the UE can set up a radio resource connection (for example, set up an RRC connection) in the camped cell. For example, when the connection setup request message carries a service type, the first base station may determine, according to a load status of the camped cell and the service type reported by the UE, whether a connection is to be set up in the camped cell, or the first base station may determine, according to a load status of the camped cell, whether a connection is to be set up in the camped cell. When identifying that the UE does not set up a radio resource connection to the camped cell, for example, when identifying that the UE needs to be handed over to another cell for access, the first base station may select an access cell used for radio resource connection setup of the UE, that is, select a cell to which the UE is to set up a link. For example, when the connection setup request message carries reported information such as a measurement result, frequency capability information, or the service type, the first base station may identify, according to the reported information, a cell that is to be used as the access cell. Alternatively, the first base station may identify, according to related policy information such as pre-stored capability information of the UE, the service type, or network load, a cell that is to be used as the access cell. In this case, a connection or a link is set up in the access cell.

After the first base station selects the access cell, the first base station sends an RRC connection request message to the UE.

In addition, the connection setup message received by the UE may be sent by the first base station, or may be sent by a base station to which the access cell belongs.

The camped cell that is not of the UE may be any cell except the camped cell.

The feedback unit 53 is configured to feed back, in the access cell, a connection setup acknowledgement message to the base station to which the access cell belongs.

After receiving the connection setup message, the UE may feed back, in the access cell, the connection setup acknowledgement message to the base station to which the access cell belongs. The connection setup acknowledgement message may be an RRC connection setup complete message at L3 (an RRC layer), or may be other acknowledgement information at L1 (a physical layer) or L2 (a MAC layer or an RLC layer), for example, a MAC control element. In addition, optionally, the air interface resource may include a radio link control (RLC) configuration, and the RLC configuration may include an RLC mode, an RLC SN length, an RLC poll timer, and the like.

In addition, the air interface resource may further include a logical channel configuration, and the logical channel configuration includes a logical channel priority, a guaranteed rate, logical channel group information, and the like.

In addition, the air interface resource may further include packet data convergence protocol (PDCP) configuration information, and the PDCP configuration information may include a discard timer, a sequence number configuration, a header compression configuration, and the like.

In addition, the air interface resource may further include media access control (MAC) configuration information, and the MAC configuration information may include the maximum number of uplink HARQ retransmissions, a periodic BSR report timer, a TA valid time, a scheduling information SR sending cycle, an available power PHR sending cycle, a DRX parameter, and the like.

In addition, the air interface resource may further include a semi-persistent scheduling configuration, and the semi-persistent scheduling configuration includes an uplink semi-persistent cycle, a downlink semi-persistent cycle, and a quantity of processes.

In addition, the air interface resource may further include a dedicated physical configuration, and the dedicated physical configuration includes a PDSCH power offset, a PUCCH resource, ACK/NACK repeat times, a PUSCH power offset, a frequency hopping mode, an uplink power control configuration, a CQI configuration, an RLF timer, a measurement format, and the like.

In addition, in addition to the air interface resource, the connection setup message may include an ID for uniquely identifying the UE in the access cell, TA information, that is, a UE adjustment time required for last uplink sending, and the like.

In addition, in this embodiment, the feedback unit 53 may feed the connection setup acknowledgement message back by using the air interface resource of the access cell.

By using the foregoing units, when the UE needs to initiate radio resource connection setup in a cell other than the cell currently being camped on, the UE does not need to re-initiate a connection setup request message, but can directly complete, based on the connection setup request message initiated in the cell currently being camped on, the RRC connection setup in the cell other than the cell currently being camped on. Therefore, a delay and signaling in a radio resource connection setup procedure can be reduced.

In this embodiment, the UE may be any intelligent device that specifically initiates an RRC connection setup, for example, a mobile phone, a tablet computer, an in-vehicle device, a wearable device, or the like.

In this embodiment, UE initiates a connection setup request message to a first base station to which a camped cell currently being camped on belongs; the UE receives a connection setup message that carries an air interface resource of an access cell, where the access cell is a camped cell that is not of the UE and that is identified by the first base station; and the UE feeds back, in the access cell, a connection setup acknowledgement message to a base station to which the access cell belongs. Therefore, when the UE needs to be handed over between cells, the UE does not need to re-initiate radio resource connection setup. Therefore, compared with the prior art, in the present invention, a delay and signaling in a radio resource connection setup procedure can be reduced.

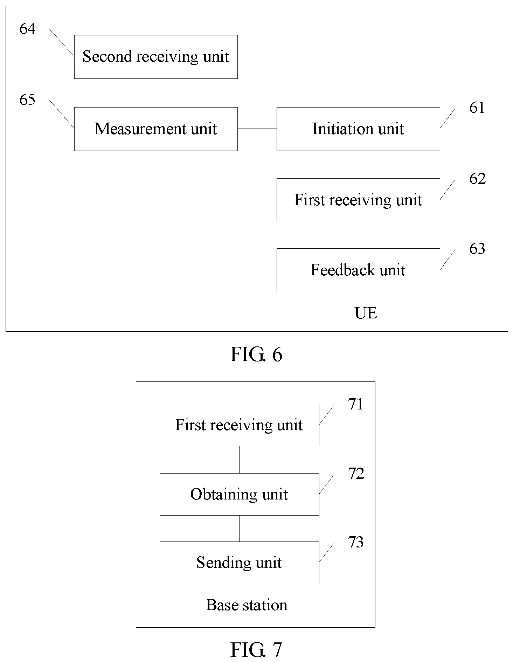

Referring to FIG. 6, FIG. 6 is a schematic structural diagram of another UE according to an embodiment of the present invention. As shown in FIG. 6, the UE includes an initiation unit 61, a first receiving unit 62, and a feedback unit 63.

The initiation unit 61 is configured to initiate a connection setup request message to a first base station to which a camped cell currently being camped on belongs.

In this embodiment, the RRC connection request message may carry reported information such as a measurement result, frequency capability information of the UE, and a service type. In this case, the first base station may further identify, based on the reported information carried in the RRC connection request message, an access cell to which the UE is to set up a connection.

The first receiving unit 62 is configured to receive a connection setup message that carries an air interface resource of the access cell, where the access cell is a camped cell that is not of the UE and that is identified by the first base station.

In this embodiment, the first receiving unit 62 may be configured to receive a connection setup message that is sent by the first base station and that carries an air interface resource of an access cell, where the access cell belongs to the first base station.

In this implementation, the UE can set up a connection to the access cell that is adjacent to the camped cell and that belongs to the first base station.

In addition, in this implementation, the air interface resource of the access cell may be selected by the first base station.

In this embodiment, the first receiving unit 62 may be configured to receive a connection setup message that is sent by the first base station and that carries an air interface resource of an access cell, where the access cell belongs to a second base station.

In this implementation, the air interface resource of the access cell may be returned to the first base station by the second base station in response to a resource request sent by the first base station.

In this implementation, the UE can set up the connection to the access cell that belongs to the second base station adjacent to the first base station. For example, when the first base station identifies that it is currently inappropriate for the UE to set up a connection to any cell that belongs to the first base station, the first base station may send a request to the neighboring second base station to request a cell that belongs to the second base station to be used for connection setup of the UE. For example, when the first base station identifies that the UE does not set up a connection to the camped cell, the first base station may send a resource request message to the neighboring second base station, and the second base station returns a response message (i.e., resource response message) to the first base station after receiving the request. The response message carries the air interface resource of the access cell, and the access cell may be a cell that is selected by the first base station according to the measurement result reported by the UE, that belongs to the second base station, and that is used for the connection setup of the UE.

The feedback unit 63 is configured to feed back, in the access cell, a connection setup acknowledgement message to a base station to which the access cell belongs.

In this embodiment, the UE may further include:
a second receiving unit 64, configured to receive system information block (SIB) information or a dedicated message broadcast by the first base station, where the SIB information or the dedicated message includes frequency information of multiple cells; and
a measurement unit 65, configured to measure the multiple cells according to the frequency information, so as to obtain measurement results of the multiple cells.

The connection setup request message carries the measurement results of the multiple cells, and the measurement results of the multiple cells are used by the first base station to select the access cell corresponding to the UE; or
the connection setup request message carries a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

The measurement result of the at least one candidate cell may be reported in a bitmap manner. For example, for a frequency F1 or a cell ID cell1 of the camped cell, and a frequency F2, a frequency F3, and a frequency F4 or a cell ID cell2, a cell ID cell3, and a cell ID cell4 of three other neighboring cells in the SIB information, if the UE supports the frequency F2 and the frequency F4 but does not support the frequency F3, or if the cell2 and the cell4 meet the measurement result but the cell3 does not meet the measurement result, the measurement result reported by the UE may include 101.

In addition, the SIB information or the dedicated message may further include measurement information, for example, a preset threshold. In this case, when measuring the multiple cells, the UE may select, as the candidate cell, a cell whose measured signal quality is higher than the preset threshold. In this case, signal quality of the access cell can be ensured. In addition, in this implementation, the measurement result may be used in combination with a capability of the UE, and the candidate cell is a cell that is supported by the UE and whose measured signal quality is higher than the preset threshold.

In this implementation, the first receiving unit 62 may monitor the at least one candidate cell, and receive, in the access cell in the at least one candidate cell, the connection setup message that carries the air interface resource of the access cell.

In this implementation, the UE can receive the connection setup message in the access cell. For example, the base station to which the access cell belongs sends the connection setup message to the UE.

In this embodiment, the connection setup request message may further carry at least one of the following:
a frequency capability supported by the UE or a measurement result.

The frequency capability and the measurement result may not be obtained from the SIB information or the dedicated message. For example, the UE measures another cell such as a preset cell or a neighboring cell, so as to obtain a measurement result of the cell. In addition, the frequency capability supported by the UE and the measurement result may be used by the first base station to select the access cell of the UE. That is, the first base station may select the access cell of the UE according to the frequency capability supported by the UE and/or the measurement result.

In this embodiment, the RRC connection setup message may further include at least one of the following:
mapping information of an RB, configuration information of an RB, TA information used to adjust uplink sending, physical layer resource information, or signature sequence information of a physical random access channel (PRACH).

Certainly, the information is only optional herein. For example, the connection setup message may not include the information.

The mapping information and the configuration information of the RB may be sent by the base station to which the access cell belongs. For example, when the access cell belongs to the second base station, the mapping information and the configuration information of the RB may be directly sent by the second base station to the UE by using the connection setup message; or the second base station sends the mapping information and the configuration information of the RB to the first base station, and then, the first base station sends the mapping information and the configuration information of the RB to the UE by using the connection setup message. Alternatively, when the access cell belongs to the first base station, the mapping information and the configuration information of the RB may be directly sent by the first base station to the UE by using the connection setup message. The configuration information may include radio link control (RLC) configuration information, packet data convergence protocol (PDCP) configuration information, and media access control (MAC) configuration information. In this case, the UE may determine an uplink transmission configuration and a downlink transmission configuration according to the configuration information and the mapping information.

In addition, the TA information used to adjust uplink sending may also be sent by the base station to which the access cell belongs. For example, when the access cell belongs to the second base station, the TA information may be directly sent by the second base station to the UE by using the connection setup message; or the second base station sends the TA information to the first base station, and then, the first base station sends the TA information to the UE by using the connection setup message; or the first base station obtains the TA information through calculation by using a timing difference between the two base stations, and sends the TA information to the UE. Alternatively, when the access cell belongs to the first base station, the TA information may be directly sent by the first base station to the UE by using the connection setup message. The TA information may be used by the UE to determine uplink sending timing. That is, the UE may determine, according to the TA information, a time of reporting the RRC setup acknowledgement message.

In addition, the UE may further maintain TA information of a group of cells, and in this case, before a predetermined timer expires, the UE may use the stored TA information to access any one of the group of cells.

In this embodiment, the UE may further send the RRC setup acknowledgement message by using a TA value sent by the first base station in the camped cell. That is, the UE may further feed back, according to the TA value sent by the first base station in the camped cell, the RRC setup acknowledgement message to the base station to which the access cell belongs.

In this embodiment, the signature sequence information of the PRACH may be signature sequence information of the access cell, and in this case, the UE may use the signature sequence information to perform non-contention based random access to the access cell.

In this embodiment, the access cell and the camped cell may be intra-frequency cells, or may be inter-frequency cells, or may be different access subnets in an evolved network. For example, the access cell and the camped cell may be respectively a macro cell and a micro cell.

In this embodiment, based on the embodiment shown in FIG. 5, multiple optional implementations are added, and can all reduce a delay and signaling in a radio resource connection setup procedure.

Referring to FIG. 7, FIG. 7 is a schematic structural diagram of a base station according to an embodiment of the present invention. As shown in FIG. 7, the base station includes a first receiving unit 71, an obtaining unit 72, and a sending unit 73.

The first receiving unit 71 is configured to receive a connection setup request message initiated by UE in a camped cell on which the UE is currently camping.

The obtaining unit 72 is configured to: when the base station identifies that the UE does not set up a connection to the camped cell, obtain an air interface resource of an access cell used for connection setup of the UE.

When it is identified that the UE needs to be handed over between cells or that the UE currently needs to execute a service in another cell, the obtaining unit 72 may obtain the air interface resource of the access cell used for the connection setup of the UE.

In addition, optionally, the air interface resource may include a radio link control (RLC) configuration, and the RLC configuration may include an RLC mode, an RLC SN length, an RLC poll timer, and the like.

In addition, the air interface resource may further include a logical channel configuration, and the logical channel configuration includes a logical channel priority, a guaranteed rate, logical channel group information, and the like.

In addition, the air interface resource may further include packet data convergence protocol (PDCP) configuration information, and the PDCP configuration information may include a discard timer, a sequence number configuration, a header compression configuration, and the like.

In addition, the air interface resource may further include media access control (MAC) configuration information, and the MAC configuration information may include the maximum number of uplink HARQ retransmissions, a periodic BSR report timer, a TA valid time, a scheduling information SR sending cycle, an available power PHR sending cycle, a DRX parameter, and the like.

In addition, the air interface resource may further include a semi-persistent scheduling configuration, and the semi-persistent scheduling configuration includes an uplink semi-persistent cycle, a downlink semi-persistent cycle, and a quantity of processes.

In addition, the air interface resource may further include a dedicated physical configuration, and the dedicated physical configuration includes a PDSCH power offset, a PUCCH resource, ACK/NACK repeat times, a PUSCH power offset, a frequency hopping mode, an uplink power control configuration, a CQI configuration, an RLF timer, a measurement format, and the like.

In addition, in addition to the air interface resource, the connection setup message may include an ID for uniquely identifying the UE in the access cell, TA information, that is, a UE adjustment time required for last uplink sending, and the like.

In this embodiment, after receiving the RRC connection request message, the base station may determine whether the UE can set up a connection in the camped cell, and determine the access cell. For example, when the connection setup request message carries reported information such as a measurement result, frequency capability information, or a service type, the base station may identify, according to the reported information, whether the UE sets up a connection in the camped cell. If the UE does not set up a connection in the camped cell, the base station may identify, according to related policy information such as the reported information, pre-stored capability information of the UE, the service type, or network load, the access cell to which the UE is to set up a connection. That is, the base station selects the access cell for the UE.

In this embodiment, the obtaining unit 72 may be configured to: select, as the access cell used for the connection setup of the UE, a cell that belongs to the base station and that is adjacent to the camped cell, and obtain the air interface resource of the access cell.

For example, when the base station identifies that the UE can set up a connection in a cell that belongs to the first base station, the base station may use the cell as the access cell, and obtain the air interface resource of the cell.

For example, when the connection setup request message carries the frequency capability information of the UE and the service type, the first base station may select, as the access cell according to the frequency capability information of the UE and the service type, a cell that belongs to the base station, whose frequency is supported by the UE, and that provides a service of the service type.

In this embodiment, the obtaining unit 72 may be configured to: send a resource request to a target base station; and receive a response message returned by the target base station in response to the resource request, where the response message carries the air interface resource of the access cell, and the access cell is a cell that belongs to the target base station and that is used for the connection setup of the UE.

For example, when the base station identifies that no cell that belongs to the base station is appropriate for the UE to set up a connection, the base station may identify, according to the reported information carried in the connection setup request message, for example, the measurement result, the frequency capability information of the UE, and the service type, a cell that belongs to the target base station, use the cell as the access cell corresponding to the UE, and send the resource request to the target base station. The target base station may be a base station to which the access cell belongs, and the access cell is selected by the base station according to the reported information carried in the RRC connection request message, and is corresponding to the UE. In addition, the resource request may further carry the measurement result, or may further carry the frequency capability information of the UE and the service type that are carried in the RRC request message, and in this case, the target base station may select the air interface resource of the access cell.

The sending unit 73 is configured to send, to the UE, a connection setup message that carries the air interface resource of the access cell, so that the UE feeds back, in the access cell, a connection setup acknowledgement message to a base station to which the access cell belongs.

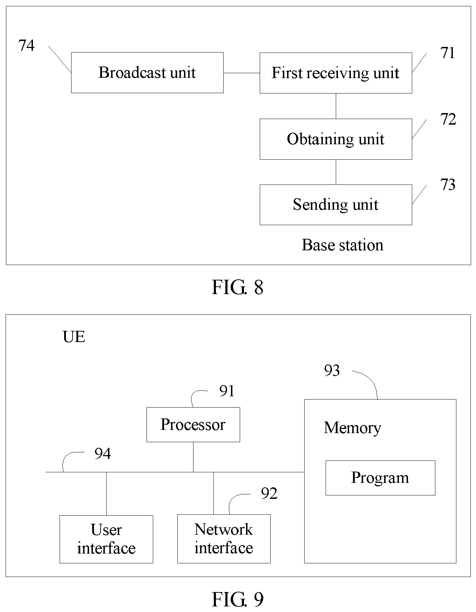

In this embodiment, as shown in FIG. 8, the base station may further include:
a broadcast unit 74, configured to broadcast system information block (SIB) information or a dedicated message, where the SIB information or the dedicated message includes frequency information of multiple cells.

The connection setup request message carries measurement results of the multiple cells, and the measurement results of the multiple cells are used by the first base station to select the access cell corresponding to the UE; or
the connection setup request message carries a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

In this case, after receiving the SIB message or the dedicated message, the UE may measure the multiple cells according to the frequency information, so as to obtain the measurement results of the multiple cells; or the UE may select, from the multiple cells according to the measurement result, the at least one candidate cell to which the UE can set up the connection.

In this case, the connection setup request message initiated by the UE may include the measurement results of the multiple cells, or include the measurement result of the at least one candidate cell, so that the first base station can select, according to the reported measurement result, the access cell corresponding to the UE.

In this embodiment, the connection setup request message may further carry at least one of the following:
a frequency capability supported by the UE or a measurement result.

The frequency capability and the measurement result may not be obtained from the SIB information or the dedicated message. For example, the UE measures another cell such as a preset cell or a neighboring cell, so as to obtain a measurement result of the cell. In addition, the frequency capability supported by the UE and the measurement result may be used by the base station to select the access cell of the UE. That is, the base station may select the access cell of the UE according to the frequency capability supported by the UE and/or the measurement result.

In this embodiment, the connection setup message may further include at least one of the following:
mapping information of an RB, configuration information of an RB, TA information used to adjust uplink sending, physical layer resource information, or signature sequence information of a PRACH.

In this embodiment, a base station receives a connection setup request message initiated by user equipment (UE) in a camped cell on which the UE is currently camping; when the base station identifies that the UE does not set up a connection in the camped cell, the base station obtains an air interface resource of an access cell used for connection setup of the UE; and the base station sends, to the UE, a connection setup message that carries the air interface resource of the access cell, so that the UE feeds back, in the access cell, a connection setup acknowledgement message to a base station to which the access cell belongs. Therefore, a delay and signaling in a radio resource connection setup procedure can be reduced.

Referring to FIG. 9, FIG. 9 is a schematic structural diagram of another UE according to an embodiment of the present invention. As shown in FIG 9, the UE includes a processor 91, a network interface 92, a memory 93, and a communications bus 94, where the communications bus 94 is configured to implement connections and communication between the processor 91, the network interface 92, and the memory 93, and the processor 91 executes a program stored in the memory 93, so as to implement the following method:
initiating a connection setup request message to a first base station to which a camped cell currently being camped on belongs;
receiving a connection setup message that carries an air interface resource of an access cell, where the access cell is a camped cell that is not of the UE and that is identified by the first base station; and
feeding back, in the access cell, a connection setup acknowledgement message to a base station to which the access cell belongs.

In this embodiment, before executing a program of initiating the connection setup request message to the first base station to which the camped cell currently being camped on belongs, the processor 91 may be further configured to execute the following program:
receiving system information block (SIB) information or a dedicated message broadcast by the first base station, where the SIB information or the dedicated message includes frequency information of multiple cells; and
measuring the multiple cells according to the frequency information, so as to obtain measurement results of the multiple cells.

The connection setup request message carries the measurement results of the multiple cells, and the measurement results of the multiple cells are used by the first base station to select the access cell corresponding to the UE; or
the connection setup request message carries a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

In this embodiment, the connection setup request message may further carry at least one of the following:
a frequency capability supported by the UE or a measurement result.

In this embodiment, a program that is executed by the processor 91 and that is of receiving the connection setup message that carries the air interface resource of the access cell may include:
monitoring the at least one candidate cell, and receiving, in the access cell in the at least one candidate cell, the connection setup message that carries the air interface resource of the access cell.

In this embodiment, a program that is executed by the processor 91 and that is of receiving the connection setup message that carries the air interface resource of the access cell may include:
receiving a connection setup message that is sent by the first base station and that carries an air interface resource of an access cell, where the access cell belongs to the first base station; or
receiving a connection setup message that is sent by the first base station and that carries an air interface resource of an access cell, where the access cell belongs to a second base station.

In this embodiment, when the access cell belongs to the second base station, the air interface resource of the access cell may be returned to the first base station by the second base station in response to a resource request sent by the first base station.

In this embodiment, the RRC connection setup message may further include at least one of the following:
mapping information of an RB, configuration information of an RB, timing adjustment (TA) information used to adjust uplink sending, physical layer resource information, or signature sequence information of a physical random access channel (PRACH).

In this embodiment, UE initiates a connection setup request message to a first base station to which a camped cell currently being camped on belongs; the UE receives a connection setup message that carries an air interface resource of an access cell, where the access cell is a camped cell that is not of the UE and that is identified by the first base station; and the UE feeds back, in the access cell, a connection setup acknowledgement message to a base station to which the access cell belongs. Therefore, when the UE needs to be handed over between cells, the UE does not need to re-initiate RRC connection setup. Therefore, compared with the prior art, in the present invention, a delay and signaling in a radio resource connection setup procedure can be reduced.

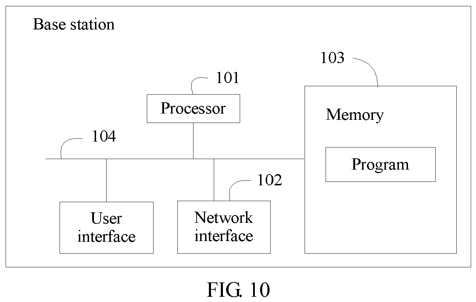

Referring to FIG. 10, FIG. 10 is a schematic structural diagram of another base station according to an embodiment of the present invention. As shown in FIG. 10, the base station includes a processor 101, a network interface 102, a memory 103, and a communications bus 104, where the communications bus 104 is configured to implement connections and communication between the processor 101, the network interface 102, and the memory 103, and the processor 101 executes a program stored in the memory 103, so as to implement the following method:
receiving a connection setup request message initiated by user equipment (UE) in a camped cell on which the UE is currently camping;
when identifying that the UE does not set up a connection in the camped cell, obtaining, by the base station, an air interface resource of an access cell used for connection setup of the UE; and
sending, to the UE, a connection setup message that carries the air interface resource of the access cell, so that the UE feeds back, in the access cell, a connection setup acknowledgement message to a base station to which the access cell belongs.

In this embodiment, a program that is executed by the processor 101 and that is of obtaining the air interface resource of the access cell used for the connection setup of the UE may include:
selecting, as the access cell used for the connection setup of the UE, a cell that belongs to the base station and that is adjacent to the camped cell, and obtaining the air interface resource of the access cell.

In this embodiment, a program that is executed by the processor 101 and that is of obtaining the air interface resource of the access cell used for the connection setup of the UE may include:
sending a resource request to a target base station; and
receiving a response message returned by the target base station in response to the resource request, where the response message carries the air interface resource of the access cell, and the access cell is a cell that belongs to the target base station and that is used for the connection setup of the UE.

In this embodiment, before executing a program of receiving the connection setup request message initiated by the user equipment (UE) in the camped cell on which the UE is currently camping, the processor 101 may be further configured to execute the following program:
broadcasting system information block (SIB) information or a dedicated message, where the SIB information or the dedicated message includes frequency information of multiple cells.

The connection setup request message carries measurement results of the multiple cells, and the measurement results of the multiple cells are used by the base station to select the access cell corresponding to the UE; or
the connection setup request message carries a measurement result of at least one candidate cell in the multiple cells, the measurement result is used by the base station to identify the access cell corresponding to the UE, and the at least one candidate cell is at least one candidate cell that is selected by the UE from the multiple cells according to the measurement result and to which the UE can set up a connection.

In this embodiment, the connection setup request message may further carry at least one of the following:
a frequency capability supported by the UE or a measurement result.

In this embodiment, the connection setup message may further include at least one of the following:
mapping information of an RB, configuration information of an RB, timing adjustment (TA) information used to adjust uplink sending, physical layer resource information, or signature sequence information of a physical random access channel (PRACH).

In this embodiment, a base station receives a connection setup request message initiated by user equipment (UE) in a camped cell on which the UE is currently camping; when identifying that the UE does not set up a connection in the camped cell, the base station obtains an air interface resource of an access cell used for connection setup of the UE; and the base station sends, to the UE, a connection setup message that carries the air interface resource of the access cell, so that the UE feeds back, in the access cell, a connection setup acknowledgement message to a base station to which the access cell belongs. Therefore, a delay and signaling in a radio resource connection setup procedure can be reduced.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may be a magnetic disc, an optical disc, a read-only memory (ROM), or a random access memory (RAM).

## Claims

1. User equipment, UE, comprising an initiation unit (51), a first receiving unit (52), and a feedback unit (53); wherein
the initiation unit (51) is configured to initiate a radio resource control, RRC, connection request message to a first base station to which a camped cell currently being camped on belongs;
the first receiving unit (52) is configured to receive a RRC connection setup message that carries an air interface resource of an access cell, wherein the access cell is a camped cell that is not of the UE and that is identified by the first base station; and
the feedback unit (53) is configured to feed back, in the access cell, a connection setup acknowledgement message to a base station to which the access cell belongs;
**characterized in that**
the RRC connection setup message further comprises mapping information of a radio bearer, RB, configuration information of an RB, and timing advance, TA, information used to adjust uplink sending; and
the UE is configured to determine an uplink transmission configuration and a downlink transmission configuration according to the configuration information and the mapping information, and to determine, according to the TA information, a time of reporting the setup acknowledgement message.

2. The UE according to claim 1, wherein the UE further comprises:
a second receiving unit (64), configured to receive system information block, SIB, information or a dedicated message broadcast by the first base station, wherein the SIB information or the dedicated message comprises frequency information of multiple cells; and
a measurement unit (65), configured to measure the multiple cells according to the frequency information, so as to obtain measurement results of the multiple cells; wherein
the RRC connection request message carries the measurement results of the multiple cells, and the measurement results of the multiple cells are used by the first base station to select the access cell corresponding to the UE; or
the RRC connection request message carries a measurement result of at least one candidate cell in the multiple cells, the measurement result is used by the first base station to identify the access cell corresponding to the UE, and the at least one candidate cell is at least one candidate cell that is selected by the UE from the multiple cells according to the measurement result and to which the UE can set up a connection.

3. The UE according to claim 2, wherein the first receiving unit (52) is configured to monitor the at least one candidate cell, and receive, in the access cell in the at least one candidate cell, the RRC connection setup message that carries the air interface resource of the access cell.

4. The UE according to claim 1, wherein the RRC connection setup request message carries a frequency capability supported by the UE or a measurement result.

5. The UE according to claim 1, 2, or 4, wherein the first receiving unit (52) is configured to receive a RRC connection setup message that is sent by the first base station and that carries an air interface resource of an access cell, wherein the access cell belongs to the first base station; or
the first receiving unit (52) is configured to receive a RRC connection setup message that is sent by the first base station and that carries an air interface resource of an access cell, wherein the access cell belongs to a second base station.

6. The UE according to claim 5, wherein when the access cell belongs to the second base station, the air interface resource of the access cell is returned to the first base station by the second base station in response to a resource request sent by the first base station.

7. The UE according to any one of claims 1 to 6, wherein the RRC connection setup message further comprises at least one of the following:
physical layer resource information, or signature sequence information of a physical random access channel, PRACH.

8. A base station, comprising a first receiving unit (71), an obtaining unit (72), and a sending unit (73); wherein
the first receiving unit (71) is configured to receive a radio resource control, RRC connection request message initiated by user equipment, UE, in a camped cell on which the UE is currently camping;
the obtaining unit (72) is configured to: when the base station identifies that the UE does not set up a connection to the camped cell, obtain an air interface resource of an access cell used for connection setup of the UE; and
the sending unit (73) is configured to send, to the UE, a RRC connection setup message that carries the air interface resource of the access cell, wherein the access cell is a camped cell that is not of the UE, so that the UE feeds back, in the access cell, a connection setup acknowledgement message to a base station to which the access cell belongs;
**characterized in that**
the RRC connection setup message further comprises mapping information of a radio bearer, RB, configuration information of an RB, and timing advance, TA, information used to adjust uplink sending, so that the UE determines an uplink transmission configuration and a downlink transmission configuration according to the configuration information and the mapping information, and determines, according to the TA information, a time of reporting the setup acknowledgement message.

9. The base station according to claim 8, wherein the obtaining unit (72) is configured to: select, as the access cell used for the connection setup of the UE, a cell that belongs to the base station and that is adjacent to the camped cell, and obtain the air interface resource of the access cell.

10. The base station according to claim 8, wherein the obtaining unit (72) is configured to: send a resource request to a target base station; and receive a response message returned by the target base station in response to the resource request, wherein the response message carries the air interface resource of the access cell, and the access cell is a cell that belongs to the target base station and that is used for the connection setup of the UE.

11. The base station according to any one of claims 8 to 10, wherein the base station further comprises:
a broadcast unit (74), configured to broadcast system information block, SIB, information or a dedicated message, wherein the SIB information or the dedicated message comprises frequency information of multiple cells; wherein
the RRR connection request message carries measurement results of the multiple cells, and the measurement results of the multiple cells are used by the base station to select the access cell corresponding to the UE; or
the RRC connection request message carries a measurement result of at least one candidate cell in the multiple cells, the measurement result is used by the base station to identify the access cell corresponding to the UE, and the at least one candidate cell is at least one candidate cell that is selected by the UE from the multiple cells according to the measurement result and to which the UE can set up a connection.

12. The base station according to any one of claims 8 to 10, wherein the RRC connection request message carries at least one of the following:
a frequency capability supported by the UE or a measurement result.

13. The base station according to any one of claims 8 to 12, wherein the RRC connection setup message further comprises at least one of the following:
physical layer resource information, or signature sequence information of a physical random access channel, PRACH.

14. A radio resource connection setup method, comprising:
initiating (101), by user equipment, UE, a radio resource control, RRC, connection request message to a first base station to which a camped cell currently being camped on belongs;
receiving (102), by the UE, a RRC connection setup message that carries an air interface resource of an access cell, wherein the access cell is a camped cell that is not of the UE and that is identified by the first base station; and
feeding back (103), by the UE in the access cell, a connection setup acknowledgement message to a base station to which the access cell belongs:
**characterized in that**
the RRC connection setup message further comprises mapping information of a radio bearer, RB, configuration information of an RB, and timing advance, TA, information used to adjust uplink sending; and
the UE determines an uplink transmission configuration and a downlink transmission configuration according to the configuration information and the mapping information, and determines, according to the TA information, a time of reporting the setup acknowledgement message.

15. The method according to claim 14, wherein the method is implemented by a computer program stored in a computer readable storage medium, the computer program instructing relevant hardware of the computer system.

## Patentansprüche

1. Nutzerausrüstung (User Equipment, UE), die eine Initiierungseinheit (51), eine erste Empfangseinheit (52), und eine Rückmeldungseinheit (53) umfasst; wobei
die Initiierungseinheit (51) dafür konfiguriert ist, eine "Radio Resource Contro"1 (RRC)-Verbindungsanforderungsnachricht an eine erste Basisstation zu initiieren, zu der eine geparkte Zelle, auf der momentan geparkt wird, gehört;
die erste Empfangseinheit (52) dafür konfiguriert ist, eine RRC-Verbindungsaufbaunachricht zu empfangen, die eine Luftschnittstellenressource einer Zugangszelle transportiert, wobei die Zugangszelle eine geparkte Zelle ist, die nicht von der UE ist und die durch die erste Basisstation identifiziert wird; und
die Rückmeldungseinheit (53) dafür konfiguriert ist, in der Zugangszelle eine Verbindungsaufbau-Bestätigungsnachricht an eine Basisstation zurückzumelden, zu der die Zugangszelle gehört;
**dadurch gekennzeichnet, dass**
die RRC-Verbindungsaufbaunachricht des Weiteren Abbildungsinformationen einer "Radio Bearer" (RB)-Konfigurationsinformation eines RB und "Timing Advance" (TA)-Informationen, die zum Justieren des Uplink-Sendens verwendet werden, umfasst; und die UE dafür konfiguriert ist, eine Uplink-Sendekonfiguration und eine Downlink-Sendekonfiguration gemäß der Konfigurationsinformation und den Abbildungsinformationen zu bestimmen, und
gemäß den TA-Informationen eine Zeit zum Berichten der Aufbau-Bestätigungsnachricht zu bestimmen.

2. UE nach Anspruch 1, wobei die UE des Weiteren Folgendes umfasst:
eine zweite Empfangseinheit (64), die dafür konfiguriert ist, "System Information Block" (SIB)-Informationen oder eine dedizierte Nachricht, die durch die erste Basisstation rundegesendet werden, zu empfangen, wobei die SIB-Informationen oder die dedizierte Nachricht Frequenzinformationen von mehreren Zellen umfassen; und
eine Messeinheit (65), die dafür konfiguriert ist, die mehreren Zellen gemäß den Frequenzinformationen zu messen, um Messergebnisse der mehreren Zellen zu erhalten;
wobei die RRC-Verbindungsanforderungsnachricht die Messergebnisse der mehreren Zellen transportiert, und die Messergebnisse der mehreren Zellen durch die erste Basisstation zum Auswählen der Zugangszelle entsprechend der UE verwendet werden; oder
die RRC-Verbindungsanforderungsnachricht ein Messergebnis von mindestens einer Kandidatenzelle in den mehreren Zellen transportiert, das Messergebnis durch die erste Basisstation zum Identifizieren der Zugangszelle entsprechend der UE verwendet wird, und die mindestens eine Kandidatenzelle mindestens eine Kandidatenzelle ist, die durch die UE aus den mehreren Zellen gemäß dem Messergebnis ausgewählt wird und zu der die UE eine Verbindung aufbauen kann.

3. UE nach Anspruch 2, wobei die erste Empfangseinheit (52) dafür konfiguriert ist, die mindestens eine Kandidatenzelle zu überwachen und, in der Zugangszelle in der mindestens einen Kandidatenzelle, die RRC-Verbindungsaufbaunachricht empfangen, die die Luftschnittstellenressource der Zugangszelle transportiert.

4. UE nach Anspruch 1, wobei die RRC-Verbindungsaufbau-Anforderungsnachricht eine Frequenzfähigkeit transportiert, die durch die UE oder ein Messergebnis unterstützt wird.

5. UE nach Anspruch 1, 2 oder 4, wobei
die erste Empfangseinheit (52) dafür konfiguriert ist, eine RRC-Verbindungsaufbaunachricht zu empfangen, die durch die erste Basisstation gesendet wird und die eine Luftschnittstellenressource einer Zugangszelle transportiert, wobei die Zugangszelle zu der ersten Basisstation gehört; oder
die erste Empfangseinheit (52) dafür konfiguriert ist, eine RRC-Verbindungsaufbaunachricht zu empfangen, die durch die erste Basisstation gesendet wird und die eine Luftschnittstellenressource einer Zugangszelle transportiert, wobei die Zugangszelle zu einer zweiten Basisstation gehört.

6. UE nach Anspruch 5, wobei, wenn die Zugangszelle zu der zweiten Basisstation gehört, die Luftschnittstellenressource der Zugangszelle durch die zweite Basisstation in Reaktion auf eine Ressourcenanforderung, die durch die erste Basisstation gesendet wurde, zu der ersten Basisstation zurückgesendet wird.

7. UE nach einem der Ansprüche 1 bis 6, wobei die RRC-Verbindungsaufbaunachricht des Weiteren mindestens eines von Folgendem umfasst:
Bitübertragungsschicht-Ressourceninformationen, und Signatursequenzinformationen eines "Physical Random Access Channel" (PRACH).

8. Basisstation, die eine erste Empfangseinheit (71), eine Erhalts-Einheit (72) und eine Sendeeinheit (73) umfasst; wobei
die erste Empfangseinheit (71) dafür konfiguriert ist, eine "Radio Resource Control" (RRC)-Verbindungsanforderungsnachricht zu empfangen, die durch eine Nutzerausrüstung (User Equipment, UE) in einer geparkten Zelle initiiert wird, in der die UE momentan parkt;
die Erhalts-Einheit (72) für Folgendes konfiguriert ist: wenn die Basisstation identifiziert, dass die UE keine Verbindung zu der geparkten Zelle aufbaut, Erhalten einer Luftschnittstellenressource einer Zugangszelle, die zum Verbindungsaufbau der UE verwendet wird; und
die Sendeeinheit (73) dafür konfiguriert ist, an die UE eine RRC-Verbindungsaufbaunachricht zu senden, die die Luftschnittstellenressource der Zugangszelle transportiert, wobei die Zugangszelle eine geparkte Zelle ist, die nicht von der UE ist, so dass die UE in der Zugangszelle eine Verbindungsaufbau-Bestätigungsnachricht an eine Basisstation zurückmeldet, zu der die Zugangszelle gehört; **dadurch gekennzeichnet, dass**
die RRC-Verbindungsaufbaunachricht des Weiteren Abbildungsinformationen einer "Radio Bearer" (RB)-Konfigurationsinformation eines RB und "Timing Advance" (TA)-Informationen, die zum Justieren des Uplink-Sendens verwendet werden, umfasst, so dass die UE eine Uplink-Sendekonfiguration und eine Downlink-Sendekonfiguration gemäß der Konfigurationsinformation und den Abbildungsinformationen bestimmt und gemäß den TA-Informationen eine Zeit des Berichtens der Aufbau-Bestätigungsnachricht bestimmt.

9. Basisstation nach Anspruch 8, wobei die Erhalts-Einheit (72) für Folgendes konfiguriert ist: Auswählen, als die Zugangszelle, die zum Verbindungsaufbau der UE verwendet wird, eine Zelle, die zu der Basisstation gehört und die neben der geparkten Zelle liegt, und Erhalten der Luftschnittstellenressource der Zugangszelle.

10. Basisstation nach Anspruch 8, wobei die Erhalts-Einheit (72) für Folgendes konfiguriert ist: Senden einer Ressourcenanforderung zu einer Ziel-Basisstation; und Empfangen einer Antwortnachricht, die durch die Ziel-Basisstation in Reaktion auf die Ressourcenanforderung zurücksendet wird, wobei die Antwortnachricht die Luftschnittstellenressource der Zugangszelle transportiert, und die Zugangszelle eine Zelle ist, die zu der Ziel-Basisstation gehört und die für den Verbindungsaufbau der UE verwendet wird.

11. Basisstation nach einem der Ansprüche 8 bis 10, wobei die Basisstation des Weiteren Folgendes umfasst:
eine Rundsendeeinheit (74), die dafür konfiguriert ist, "System Information Block" (SIB)-Informationen oder eine dedizierte Nachricht rundzusenden, wobei die SIB-Informationen oder die dedizierte Nachricht Frequenzinformationen von mehreren Zellen umfassen; wobei
die RRR-Verbindungsanforderungsnachricht Messergebnisse der mehreren Zellen transportiert, und die Messergebnisse der mehreren Zellen durch die Basisstation zum Auswählen der Zugangszelle entsprechend der UE verwendet werden; oder
die RRC-Verbindungsanforderungsnachricht ein Messergebnis von mindestens einer Kandidatenzelle in den mehreren Zellen transportiert, das Messergebnis durch die Basisstation zum Identifizieren der Zugangszelle entsprechend der UE verwendet wird, und die mindestens eine Kandidatenzelle mindestens eine Kandidatenzelle ist, die durch die UE aus den mehreren Zellen gemäß dem Messergebnis ausgewählt wird und zu der die UE eine Verbindung aufbauen kann.

12. Basisstation nach einem der Ansprüche 8 bis 10, wobei die RRC-Verbindungsanforderungsnachricht mindestens eines von Folgendem transportiert:
eine durch die UE unterstützte Frequenzfähigkeit, und ein Messergebnis.

13. Basisstation nach einem der Ansprüche 8 bis 12, wobei die RRC-Verbindungsaufbaunachricht des Weiteren mindestens eines von Folgendem umfasst: Bitübertragungsschicht-Ressourceninformationen, und Signatursequenzinformationen eines "Physical Random Access Channel" (PRACH).

14. Funkressourcenverbindungsaufbauverfahren, das Folgendes umfasst:
Initiieren (101), durch eine Nutzerausrüstung (User Equipment, UE), einer Radio Ressource Control (RRC)-Verbindungsanforderungsnachricht an eine erste Basisstation, zu der eine geparkte Zelle, auf der momentan geparkt wird, gehört;
Empfangen (102), durch die UE, einer RRC-Verbindungsaufbaunachricht, die eine Luftschnittstellenressource einer Zugangszelle transportiert, wobei die Zugangszelle eine geparkte Zelle ist, die nicht von der UE ist und die durch die erste Basisstation identifiziert wird; und
Zurückmelden (103), durch die UE in der Zugangszelle, einer Verbindungsaufbau-Bestätigungsnachricht an eine Basisstation, zu der die Zugangszelle gehört;
**dadurch gekennzeichnet, dass** die RRC-Verbindungsaufbaunachricht des Weiteren Abbildungsinformationen aus einer "Radio Bearer" (RB)-Konfigurationsinformation eines RB und "Timing Advance" (TA)-Informationen, die zum Justieren des Uplink-Sendens verwendet werden, umfasst; und
die UE eine Uplink-Sendekonfiguration und eine Downlink-Sendekonfiguration gemäß der Konfigurationsinformation und den Abbildungsinformationen bestimmt und gemäß den TA-Informationen eine Zeit des Berichtens der Aufbau-Bestätigungsnachricht bestimmt.

15. Verfahren nach Anspruch 14, wobei das Verfahren durch ein Computerprogramm implementiert wird, das auf einem computerlesbaren Speichermedium gespeichert ist, wobei das Computerprogramm relevante Hardware des Computersystems instruiert.

## Revendications

1. Equipement d'utilisateur, UE, comprenant une unité d'initiation (51), une première unité de réception (52) et une unité de retour (53), dans lequel :
l'unité d'initiation (51) est conçue pour initier un message de demande de connexion par commande de ressource radio, RRC, vers une première station de base à laquelle une cellule campée qui est actuellemment campée appartient ;
la première unité de réception (52) est conçue pour recevoir un message d'établissement de connexion RRC qui transporte une ressource d'interface aérienne d'une cellule d'accès, dans lequel la cellule d'accès est une cellule campée qui ne relève pas de l'UE et qui est identifiée par la première station de base ; et
l'unité de retour (53) est conçue pour renvoyer, dans la cellule d'accès, un message d'accusé de réception d'établissement de connexion à une station de base à laquelle la cellule d'accès appartient ;
**caractérisé en ce que** :
le message d'établissement de connexion RRC comprend en outre des informations de mappage d'une porteuse radio, RB, des informations de configuration d'une RB, et des informations d'avance de synchronisation, TA, utilisées pour ajuster l'envoi en liaison montante ; et
l'UE est conçu pour déterminer une configuration de transmission en liaison montante et une configuration de transmission en liaison descendante en fonction des informations de configuration et des informations de mappage, et pour déterminer, en fonction des informations TA, un temps de rapport du message d'accusé de réception d'établissement.

2. UE selon la revendication 1, l'UE comprenant en outre :
une seconde unité de réception (64) conçue pour recevoir des informations de bloc d'informations système, SIB, ou un message dédié diffusé par la première station de base, dans lequel les informations SIB ou le message dédié comprennent des informations de fréquence de multiples cellules ; et
une unité de mesure (65) conçue pour mesurer les multiples cellules en fonction des informations de fréquence, de manière à obtenir des résultats de mesure des multiples cellules ; dans lequel
le message de demande de connexion RRC transporte les résultats de mesure des multiples cellules, et les résultats de mesure des multiples cellules sont utilisés par la première station de base pour choisir la cellule d'accès correspondant à l'UE ; ou
le message de demande de connexion RRC transporte un résultat de mesure d'au moins une cellule candidate dans les multiples cellules, le résultat de mesure est utilisé par la première station de base pour identifier la cellule d'accès correspondant à l'UE, et l'au moins une cellule candidate est au moins une cellule candidate qui est choisie par l'UE parmi les multiples cellules en fonction du résultat de mesure et vers laquelle l'UE peut établir une connexion.

3. UE selon la revendication 2, dans lequel la première unité de réception (52) est conçue pour contrôler l'au moins une cellule candidate, et recevoir, dans la cellule d'accès dans l'au moins une cellule candidate, le message d'établissement de connexion RRC qui transporte la ressource d'interface aérienne de la cellule d'accès.

4. UE selon la revendication 1, dans lequel le message de demande d'établissement de connexion RRC transporte une capacité de fréquence prise en charge par l'UE ou un résultat de mesure.

5. UE selon la revendication 1, 2 ou 4, dans lequel la première unité de réception (52) est conçue pour recevoir un message d'établissement de connexion RRC qui est envoyé par la première station de base et qui transporte une ressource d'interface aérienne d'une cellule d'accès, dans lequel la cellule d'accès appartient à la première station de base ; ou
la première unité de réception (52) est conçue pour recevoir un message d'établissement de connexion RRC qui est envoyé par la première station de base et qui transporte une ressource d'interface aérienne d'une cellule d'accès, dans lequel la cellule d'accès appartient à une seconde station de base.

6. UE selon la revendication 5, dans lequel lorsque la cellule d'accès appartient à la seconde station de base, la ressource d'interface aérienne de la cellule d'accès est renvoyée vers la première station de base par la seconde station de base en réponse à une demande de ressource envoyée par la première station de base.

7. UE selon l'une quelconque des revendications 1 à 6, dans lequel le message d'établissement de connexion RRC comprend en outre l'un au moins des éléments suivants :
des informations de ressource de couche physique, ou des informations de séquence de signature d'un canal d'accès aléatoire physique, PRACH.

8. Station de base comprenant une première unité de réception (71), une unité d'obtention (72) et une unité d'envoi (73), dans laquelle
la première unité de réception (71) est conçue pour recevoir un message de demande de connexion par commande de ressource radio, RRC, initié par un équipement d'utilisateur, UE, dans une cellule campée sur laquelle l'UE campe actuellement ;
l'unité d'obtention (72) est conçue pour : lorsque la station de base identifie que l'UE n'établit pas de connexion vers la cellule campée, obtenir une ressource d'interface aérienne d'une cellule d'accès utilisée pour l'établissement de connexion de l'UE ; et
l'unité d'envoi (73) est conçue pour envoyer, à l'UE, un message d'établissement de connexion RRC qui transporte la ressource d'interface aérienne de la cellule d'accès, dans laquelle la cellule d'accès est une cellule campée qui ne relève pas de l'UE, de sorte que l'UE renvoie, dans la cellule d'accès, un message d'accusé de réception d'établissement de connexion à une station de base à laquelle la cellule d'accès appartient ;
**caractérisée en ce que**
le message d'établissement de connexion RRC comprend en outre des informations de mappage d'une porteuse radio, RB, des informations de configuration d'une RB, et des informations d'avance de synchronisation, TA, utilisées pour ajuster l'envoi en liaison montante, de sorte que l'UE détermine une configuration de transmission en liaison montante et une configuration de transmission en liaison descendante en fonction des informations de configuration et des informations de mappage, et détermine, en fonction des informations TA, un temps de rapport du message d'accusé de réception d'établissement.

9. Station de base selon la revendication 8, dans laquelle l'unité d'obtention (72) est conçue pour : choisir, comme cellule d'accès utilisée pour l'établissement de connexion de l'UE, une cellule qui appartient à la station de base et qui est adjacente à la cellule campée, et obtenir la ressource d'interface aérienne de la cellule d'accès.

10. Station de base selon la revendication 8, dans laquelle l'unité d'obtention (72) est conçue pour : envoyer une demande de ressource à une station de base cible ; et recevoir un message de réponse renvoyé par la station de base cible en réponse à la demande de ressource, dans laquelle le message de réponse transporte la ressource d'interface aérienne de la cellule d'accès, et la cellule d'accès est une cellule qui appartient à la station de base cible et qui est utilisée pour l'établissement de connexion de l'UE.

11. Station de base selon l'une quelconque des revendications 8 à 10, la station de base comprenant en outre :
une unité de diffusion (74) conçue pour diffuser des informations de bloc d'informations système, SIB, ou un message dédié, dans laquelle les informations SIB ou le message dédié comprennent des informations de fréquence de multiples cellules ; dans laquelle
le message de demande de connexion RRR transporte des résultats de mesure des multiples cellules, et les résultats de mesure des multiples cellules sont utilisés par la station de base pour choisir la cellule d'accès correspondant à l'UE ; ou
le message de demande de connexion RRC transporte un résultat de mesure d'au moins une cellule candidate dans les multiples cellules, le résultat de mesure est utilisé par la station de base pour identifier la cellule d'accès correspondant à l'UE, et l'au moins une cellule candidate est au moins une cellule candidate qui est choisie par l'UE parmi les multiples cellules en fonction du résultat de mesure et vers laquelle l'UE peut établir une connexion.

12. Station de base selon l'une quelconque des revendications 8 à 10, dans laquelle le message de demande de connexion RRC comprend l'un au moins des éléments suivants :
une capacité de fréquence prise en charge par l'UE ou un résultat de mesure.

13. Station de base selon l'une quelconque des revendications 8 à 12, dans laquelle le message d'établissement de connexion RRC comprend en outre l'un au moins des éléments suivants :
des informations de ressource de couche physique, ou des informations de séquence de signature d'un canal d'accès aléatoire physique, PRACH.

14. Procédé d'établissement de connexion de ressource radio, consistant à :
initier (101), avec un équipement d'utilisateur, UE, un message de demande de connexion par commande de ressource radio, RRC, vers une première station de base à laquelle une cellule campée qui est actuellemment campée appartient ;
recevoir (102), avec l'UE, un message d'établissement de connexion RRC qui transporte une ressource d'interface aérienne d'une cellule d'accès, dans lequel la cellule d'accès est une cellule campée qui ne relève pas de l'UE et qui est identifiée par la première station de base ; et
renvoyer (103), avec l'UE dans la cellule d'accès, un message d'accusé de réception d'établissement de connexion à une station de base à laquelle la cellule d'accès appartient ;
**caractérisé en ce que** :
le message d'établissement de connexion RRC comprend en outre des informations de mappage d'une porteuse radio, RB, des informations de configuration d'une RB, et des informations d'avance de synchronisation, TA, utilisées pour ajuster l'envoi en liaison montante ; et
l'UE détermine une configuration de transmission en liaison montante et une configuration de transmission en liaison descendante en fonction des informations de configuration et des informations de mappage, et détermine, en fonction des informations TA, un temps de rapport du message d'accusé de réception d'établissement.

15. Procédé selon la revendication 14, le procédé étant mis en oeuvre par un programme informatique stocké dans un support de stockage lisible par ordinateur, le programme informatique donnant des instructions au matériel adéquat du système informatique.
